# EUROPEAN PATENT APPLICATION

(11) **EP 4 276 775 A1**
(43) Date of publication of application: **15.11.2023**
(21) Application number: 22172529.4
(22) Date of filing: 10.05.2022
(51) Int. Cl.: G06V 20/64, G06V 10/82, G06V 10/75, G06V 10/774

(54) **3D-OBJECT IDENTIFICATION AND QUALITY ASSESSMENT**

(71) Applicant: AM-Flow Holding B.V., 1018 JA Amsterdam (NL)
(72) Inventor: MAY, Gideon, 1018 JA Amsterdam (NL); KOELSTRA, Reinder Alexander Lambertus, 1018 JA Amsterdam (NL); LIU, Yueting, 1018 JA Amsterdam (NL); VAN DER SPEK, Jonathan, 1018 JA Amsterdam (NL); RINK, Stefan, 1018 JA Amsterdam (NL)
(74) Representative: V.O.

(57) **Abstract**

A 3D-object identification and quality assessment system (1) is provided that comprises an evaluation module (9) configured to receive respective correspondence indications (CPp,q) for each of object class (OBJq) and to perform the following procedures in a parallel manner:
generating a class indication signal (I) indicative for a most probable object class identified for the inspected 3D object; and
generating a quality assessment signal (Q) indicating a value for an extent to which the inspected 3D object meets the quality requirements for the most probable one of the object classes. The present disclosure further provides a 3D-object identification and quality assessment method, a 3D-object manufacturing system comprising the 3D-object identification and quality assessment system and a method of training a 3D-object identification and quality assessment system.

## Description

### BACKGROUND

### Field

The present application pertains to a 3D-object identification and quality assessment system.

The present application further pertains to a 3D-object identification and quality assessment method

The present application further relates to a method for training a 3D-object 3D-object identification and quality assessment system.

The present application further relates to a 3D-object manufacturing facility provided with a 3D-object identification and quality assessment system.

### Related Art

A modern manufacturing site may simultaneously manufacture a large quantity of products with mutually different specifications. Therewith a plurality of production steps may be applied including additive manufacturing steps, such as 3D-printing, assembling, painting as well as subtractive manufacturing steps, such as cutting grinding and other types of manufacturing steps, such as curing.

Dependent on product specifications supplied by customers a variety of products is simultaneously manufactured. In accordance with a respective product specification, a respective one or more manufacturing operations are performed with which the specified product is obtained. Product manufacturing processes for mutually different products may share one or more manufacturing steps, e.g. involve a same painting step, or involve a common 3D-printing step. Therewith an efficient use of production resources is achieved. However, it is essential that subsequent to such a common step the obtained (semi-finished) products can be efficiently redirected in accordance with their own product specification. Whereas two mutually different semi-finished products may involve a common manufacturing step, that common manufacturing step may be succeeded by mutually different manufacturing steps for each of the semi-finished products. Two mutually different end-product sharing a common manufacturing step may need to be packaged differently.

In order to properly redirect the mutually different (semi-finished) products in such a manufacturing process it is of utmost importance that the different (semi-finished) products are properly recognized. In accordance therewith the (semi-finished) product is routed, e.g. to a further production stage, a packaging station, or discarded for lack of quality. Typically therewith the (semi-finished) product is identified using machine vision technology and the identified product is inspected for quality requirements. Only then can the product be routed to a proper subsequent destination in the manufacturing facility. Hence these steps affect the overall production efficiency.

### SUMMARY

In accordance with a first aspect of the present disclosure an improved 3D-object identification and quality assessment system is provided herewith.

In accordance with a second aspect of the present disclosure an improved 3D-object identification and quality assessment method is provided herewith.

In accordance with a third aspect a 3D-object manufacturing facility comprising the improved 3D-object identification and quality assessment system is provided herewith.

In accordance with a fourth aspect a method of training a 3D-object identification and quality assessment system is provided herewith.

Embodiments of an improved 3D-object identification and quality assessment system comprise a facility to provide for an inspected 3D-object respective sets of correspondence indications, each set of correspondence indications indicating respective correspondences between respective characteristics of the inspected 3D-object and said respective characteristics of a reference object class;
an evaluation module configured to receive the respective sets of correspondence indications and to perform the following procedures in a parallel manner:
generating a class indication signal indicative for a most probable object class identified for the inspected 3D object; and
generating a quality assessment signal indicating a value for an extent to which the inspected 3D object meets the quality requirements for the most probable one of the object classes.

Therewith the 3D-object identification and quality assessment system is capable to efficiently classify an object to be inspected and to determine whether that object meets quality requirements. The quality assessment steps do not need to be postponed until the object is classified.

In exemplary embodiment of the improved 3D-object identification and quality assessment system the facility to provided respective sets of correspondence indications comprises:
an object information extraction unit comprising one or more sensing device to provide sensing data indicative for sensed physical aspects of a 3D object and to provide a plurality of object information signals, each indicative for a respective characteristic in said sensing data;
a database storing respective reference feature vector sets for respective characteristics wherein each respective reference feature vector set comprises respective reference feature vectors for respective object classes of 3D-objects, wherein a respective reference feature vector in a respective reference feature vector set is the feature vector expected to be extracted for the respective characteristic if the 3D-object is a specimen of the respective one of the plurality of classes;
a respective comparator for each respective characteristic configured to compare the feature vector for said respective characteristic extracted by its associated feature module with each of the reference feature vectors in the respective feature set for said respective characteristic and to output a respective correspondence indication for the correspondence of the extracted feature vector for said respective characteristic with each of the reference feature vectors for said respective characteristic.

In exemplary embodiments the class indication signal further indicates respective probabilities that the inspected 3D object belongs to respective object classes.

I said exemplary embodiments or in other exemplary embodiments the quality assessment signal further indicates respective values for an extent to which the inspected 3D object meets quality requirements for respective object classes.

In some embodiments generating a class indication signal comprises indicating an inspected 3D object as being a member of an object class if at least a subset of said correspondence indications are indicative for a correspondence of the inspected 3D object with said object class. In those embodiments, or in other embodiments generating a quality assessment signal comprises indicating that the inspected 3D object meets the quality requirements for an object class if each of said correspondence indications are indicative for a correspondence of the inspected 3D object with said object class.

3D-object information signals may be obtained with one or more sensing devices. For example, the one or more sensing devices comprise one or more of a Time Of Flight based laser scanner, an Infrared grid projection based laser scanner an RGB camera, an RGBD camera, a sonar sensors, a radar scanners, an X-ray scanner, a CT-scanner, digital holography imaging device, a weighting device and the like.

Mutually different physical aspects of a 3D-object may be obtained using mutually different sensing devices. Alternatively, mutually different characteristic information signals may be obtained by processing an object information input signal in mutually different ways. As an example, the plurality of feature modules comprises at least two feature modules that are configured to extract a respective feature vector for a respective one of a plurality of characteristics from output data, i.e. the object information input signal of the feature module, obtained from a common sensing device. Also hybrid approaches are possible wherein the system comprises a plurality of sensing devices and a plurality of feature modules, wherein at least one feature module extracts the feature vector from a plurality of object information input signals, i.e. image data of an object obtained from two or more perspectives.

Embodiments of an improved 3D-object identification and quality assessment method, comprise:
- providing for an inspected 3D-object respective sets of correspondence indications, each set of correspondence indications indicating respective correspondences between respective characteristics of the inspected 3D-object and said respective characteristics of a reference object class;
- in a parallel manner performing an identification procedure and a qualification procedure; wherein:
- the identification procedure comprises, based on provided correspondence indications generating a class indication signal indicative for a most probable one of the object classes of an inspected 3D-object; and
- the qualification procedure comprises based on the provided correspondence indications generating a quality assessment signal indicating respective values for an extent to which the inspected 3D object meets quality requirements for the most probable one of the object classes.

In exemplary embodiments of the improved 3D-object identification and quality assessment method the process of providing for an inspected 3D-object respective sets of correspondence indications comprises:
sensing one or more physical aspects of an inspected 3D object and providing output data, serving as an object information input signal for further operations, indicative for the one or more sensed physical aspects of the inspected 3D object;
extracting respective feature vectors indicative for respective one of a plurality of characteristics in the output data;
comparing the respective feature vector of each characteristic with each of the reference feature vectors in a respective reference feature set for said each characteristic and providing a respective correspondence indication for the correspondence of the extracted feature vector for said respective characteristic with each of the reference feature vectors for said respective characteristic, wherein a respective reference feature vector in a respective reference feature vector set is the feature vector expected to be extracted for the respective characteristic if the 3D-object is a specimen of the respective one of the plurality of classes.

Embodiments of a 3-dimensional (3D) object manufacturing system according to the third aspect comprise in addition to an embodiment of a 3D-object identification and quality assessment system according to the first aspect:
- a specification receiving facility to receive product specification data;
- one or more manufacturing system units for manufacturing 3D-objects in accordance with said product specification data;
- at least an actuator system unit to receive an inspected 3D-obj ect and to act on said 3D-object in accordance with the identification signal and the quality assessment signal. In this way the actuator system unit can efficiently act on the inspected 3D-object, examples thereof are:
- the actuator system unit redirects the 3D-object to a further manufacturing/processing stage so as to achieve that a further manufacturing/processing step is applied according to the class of the 3D-object in case the 3D-object is a semi-finished product meeting all quality requirements;
- the actuator system unit redirects the 3D-object to a packaging line where the 3D-object is to be packaged in accordance with its identified 3D-object class in case the 3D-object is a finished product meeting all quality requirements;
- the actuator system unit having identified an 3D object of a particular object-class that does not meet all quality requirements returns the 3D-object to a previous manufacturing/processing stage for that object-class to achieve that a preceding manufacturing/processing step is repeated in order to achieve that said 3D-object meets all quality requirements;
- the actuator system unit having identified a 3D object of a particular object-class that does not meet all quality requirements forwards the 3D-object to a manual inspection station;
- the actuator system unit having encountered an unidentified 3D object forwards the 3D-object to a manual inspection station;
- the actuator system unit having identified a 3D object of a particular object-class that does not meet all quality requirements forwards the 3D-object to recycling station;
- the actuator system unit having encountered an unidentified 3D object forwards the 3D-object to a recycling station.

According to a fourth aspect a method of training a 3D-object identification and quality assessment system that comprises a plurality of trainable feature modules is provided.

Embodiments of said method of training comprise:
acquiring a respective object information input signal for each of a plurality of object classes;
for each object information input signal generating mutually different types of augmented sets of object information input signals, wherein each type of augmented set is obtained by varying N-1 of a number of N signal properties, wherein N is a natural number that is at least equal to the number of augmented sets and wherein a respective one of the N properties is not varied in each of the mutually different augmented sets;
providing a plurality of supersets, wherein each superset comprises all augmented sets of a respective type;
using each of the supersets to train a respective feature module, wherein training a respective feature module with a respective superset comprises repeating the following steps:
   selecting a pair of a first object information input signal and a second object information input signal from the respective superset,
   with the trainable feature module computing a respective feature vector for the first and the second object information input signal,
   computing a distance value indicative for a distance between the feature vectors,
   generating a loss value by comparing the distance value with a predetermined distance value depending on whether or not the first and the second object information input signals are augmented object information input signals derived from an object of a same object class,
   training the trainable feature module by backpropagation of the loss value.

### BRIEF DESCRIPTION OF THE DRAWINGS

These and other aspects are described in more detail with reference to the drawing. Therein:
FIG. 1 shows a first embodiment of a 3D-object identification and quality assessment system.
FIG. 2 shows an exemplary module of said embodiment;
FIG. 3 demonstrates an operation of the embodiment;
FIG. 4 shows a second embodiment of a 3D object identification and quality assessment system;
FIG. 5 shows a third embodiment of a 3D object identification and quality assessment system;
FIG. 6 shows a module of the third embodiment in more detail;
FIG. 7 shows an another module of the third embodiment in more detail;
FIG. 8 schematically shows a 3D-object identification and quality assessment method;
FIG. 9A and 9B schematically show a training procedure for training a 3D-object identification and quality assessment system, therein FIG. 9A shows steps involved in the training procedure and FIG. 9B shows components involved therein.

### DETAILED DESCRIPTION OF EMBODIMENTS

Like reference symbols in the various drawings indicate like elements unless otherwise indicated.

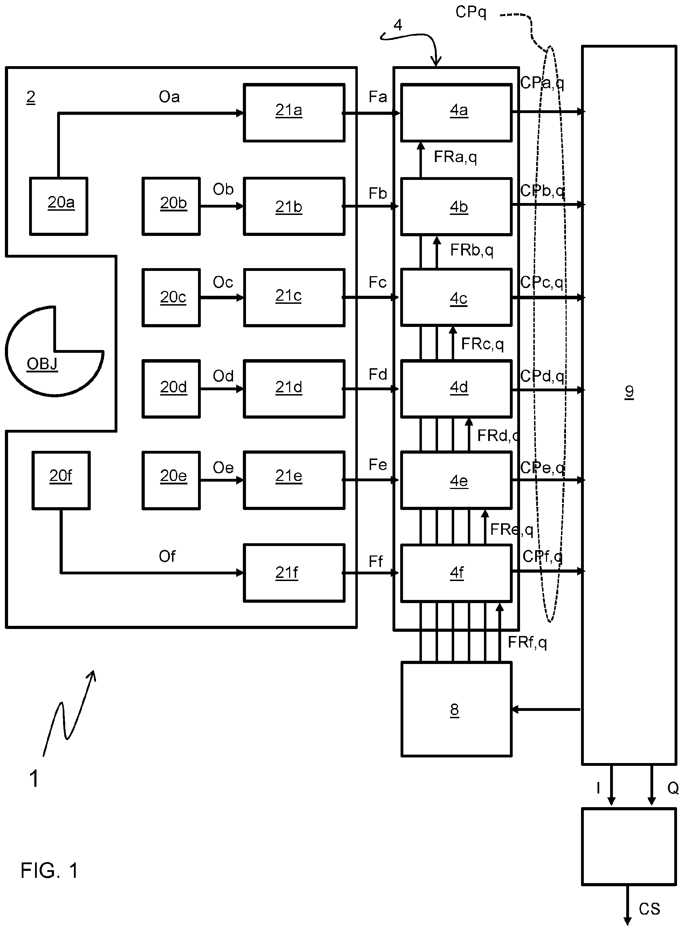

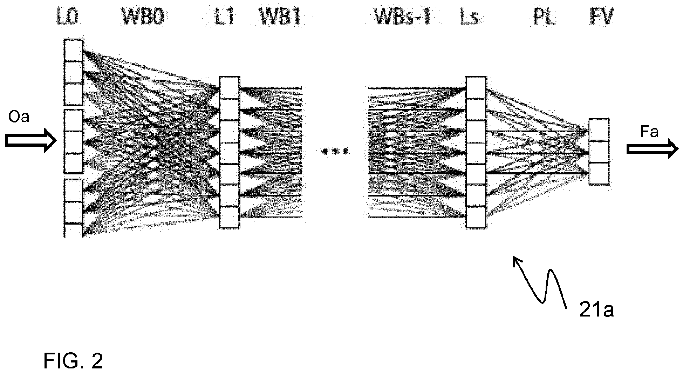

FIG. 1 shows a first embodiment of a 3D object identification and quality assessment system 1. The embodiment comprises an object information extraction unit 2, that provides a plurality of object information signals Fa, Fb, ...,Ff, each being a feature vector indicative for a respective characteristic in physically perceivable aspects of an inspected 3D object. In the example of FIG. 1, the object information extraction unit 2 comprises a plurality of sensing devices 20a, 20b, ...,20f that each provide sensing data Oa, Ob, ...,Of indicative for a specific sensed physical aspect of a 3D object OBJ. The object information extraction unit 2 in this embodiment further comprises for each sensing device 20a, 20b,...,20f a proper feature module 21a, 21b,...,21f to perform a dimension reduction on the sensing data Oa, Ob,... Of and to provide the respective object information signals Fa, Fb, ...,Ff. Feature module 21a is shown in more detail in FIG. 2. The other feature modules 21b,...,21f have a corresponding architecture.

The exemplary feature module 21a shown in FIG. 2 is configured to perform a dimension reduction on the sensing data Oa. In one embodiment the feature module 21a and the other feature modules 21b, ..., 21f have a core formed by the ResNet50 Neural Network and in addition thereto an additional fully connected layer, a batch normalization layer and a new feature vector layer with a size of 1024 but in other embodiments there can be any number of extra layers of any type and varying length with or without associated weights and biases attached to the core. In the example shown, the sensing data, e.g. a frame of image data are propagated to subsequent layers L 0 through L s of arbitrary type and length with associated weights and biases WB 0 through WB s-1 with a pooling layer PL attached to L s to produce a final feature vector Fa of a particular size that is provided at the output as the object information signal indicative for a characteristic in the sensing data.

The identification and quality assessment system 1 shown in FIG. 1 comprises a comparison unit 4 having comparators 4a,...,4f. Each of the comparators compares a particular one of the feature vectors Fa, Fb, ...,Ff, with the corresponding feature vectors FRp,q obtained from a database 8 that were determined for reference objects q. Accordingly, the comparators 4a,... ,4f compare the feature vector Fa with each of the reference feature vectors FRa,1, ...Fra, n of n reference objects. In response thereto, the comparators 4a,...,4f output a respective correspondence indication CPp,q for the correspondence of the extracted feature vector Fa for the respective characteristic with each of the reference feature vectors FRa, 1, ...Fra, n for the respective characteristic.

The correspondence indications CPp,q together form a set of correspondence indications indicating respective correspondences between respective characteristics of the inspected 3D-object OBJ and the respective characteristics of a reference object class OBJq. Based on the correspondence indications CPp,q provided by the comparator unit 4 the evaluation module 9 generates a class indication signal I indicative for a most probable object class identified for the inspected 3D object as well as a quality assessment signal Q that indicates a value for an extent to which the inspected 3D object meets the quality requirements for the most probable one of the object classes.

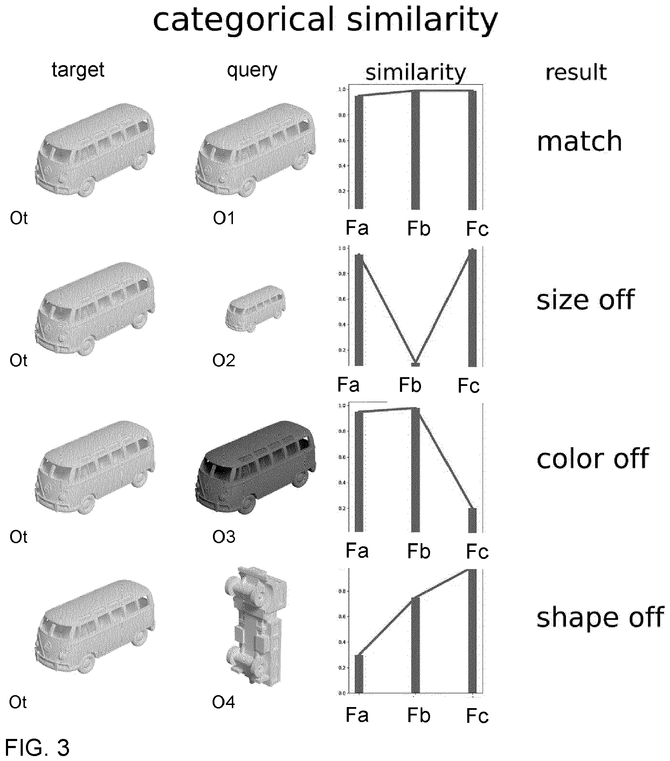

FIG. 3 illustrates an example, wherein a shape, size, and color are mutually different characteristics as indicated by a proper object information signal Fa, Fb, Fc. For each characteristic, the object information signal is compared with each of the reference object information signals for that characteristic obtained for the reference objects.

In the example shown it can be seen that the first query object 01 matches the target object with respect to all characteristics shape, size, and color. Accordingly the evaluation module 9 generates a class indication signal I that indicates that Ot is the most probable object class identified for the inspected 3D object 01 as well as a quality assessment signal Q that indicates that the inspected 3D object 01 meets the quality requirements for the target class Ot.

The second query object O2 matches the target object Qt with respect to the characteristics color and shape, but fails to match the target object Ot with respect to the characteristic size. Accordingly the evaluation module 9 generates a class indication signal I that indicates that Ot is the most probable object class identified for the inspected 3D object O2 and generates a quality assessment signal Q that indicates that the second query object O2 fails to match the target object Ot with respect to the characteristic size.

Analogously, in this example, the evaluation module 9 generates a class indication signal I that indicates that Ot is the most probable object class identified for the inspected 3D object O3 and generates a quality assessment signal Q that indicates that the inspected 3D object O3 fails to match the target object Ot with respect to the characteristic color.

Likewise, in this example, the evaluation module 9 generates a class indication signal I that indicates that Ot is the most probable object class identified for the inspected 3D object O4 and generates a quality assessment signal Q that indicates that the inspected 3D object O4 fails to match the target object Ot with respect to the characteristic shape.

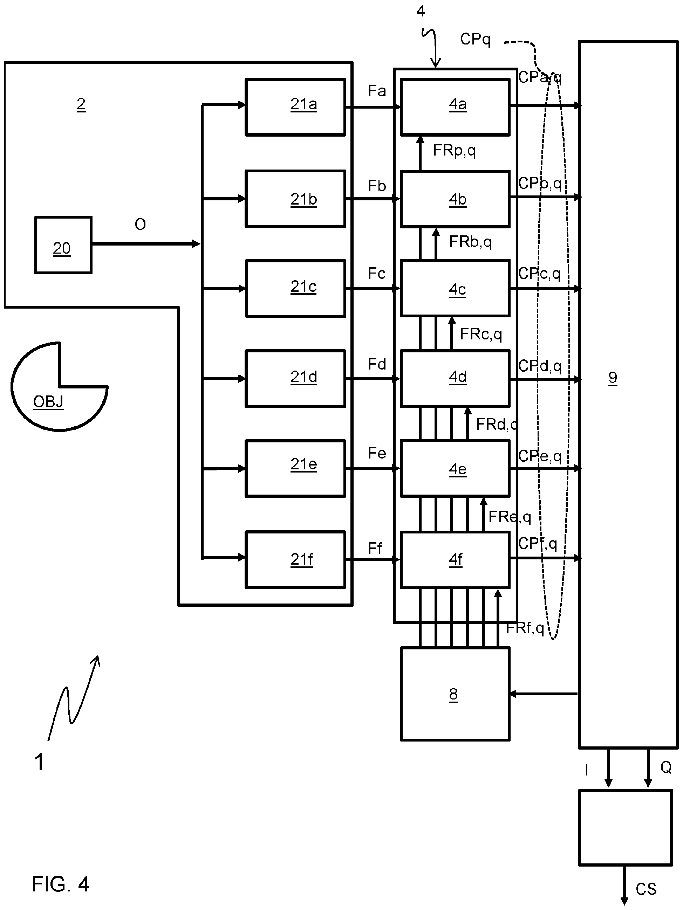

FIG. 4 shows a second embodiment of a 3D-object identification and quality assessment system 1. In this embodiment, the object information extraction unit 2 comprises a single sensing device 20, for example a camera, that provides sensing data O, for example a frame of image data of the 3D object OBJ. The object information extraction unit 2 in this embodiment further comprises a plurality of feature module 21a, 21b,...,21f that extract a particular characteristic from the sensing data O. In case the extracted sensing data O for the object is an image frame, the feature modules 21a, 21b,...,21f may for example each extract a feature vector indicative for image features in a proper spatial frequency range and/or image features in a specific part of the visual spectrum. Also a feature module may extract a feature vector indicative for morphological characteristics, e.g. size or aspect ratio and the like. Other examples are grades of reflectivity, e.g. specular, diffuse etc.

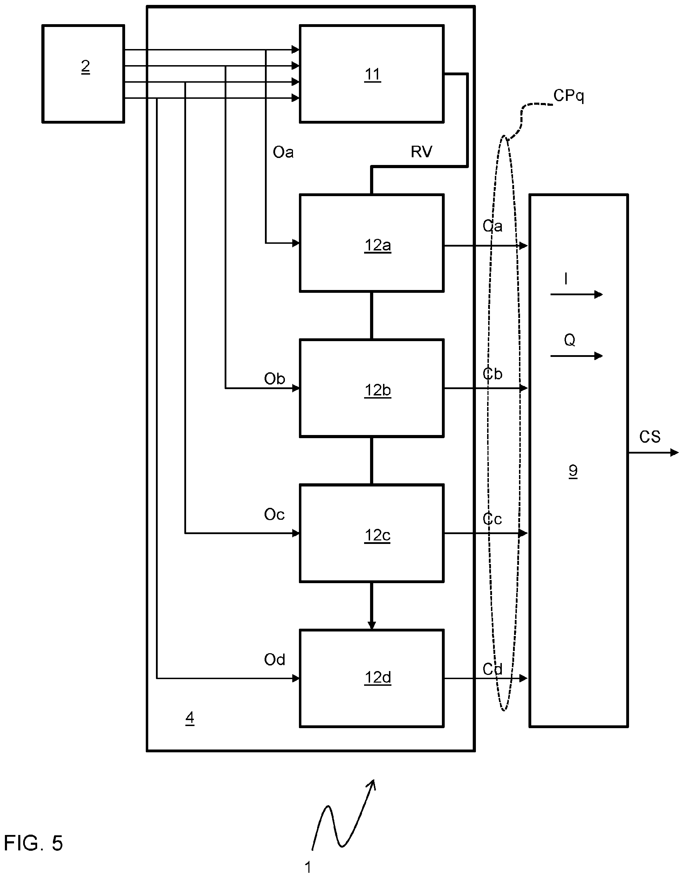

FIG. 5 shows a third embodiment of a 3D-object identification and quality assessment system 1. The object information extraction unit 2, which is not shown in detail in FIG. 5 is for example provided in the form as shown in FIG. 1 or FIG. 4. In the example of FIG. 5, the 3D-object identification and quality assessment system 1 comprises a ranking module 11, which based on the plurality of object information signals determines a ranking vector that indicates a list with a predetermined number of object class indications estimated by the ranking module 11 as having the highest likelihood of being the object class of the 3D object. In addition the 3D-object identification and quality assessment system 1 of FIG. 5 comprises a plurality of classification modules 12a, 12b, 12c, 12d. Each processes a respective one of the plurality of object information signals and provides a respective classification signal (Ca, Cb, Cc, Cd) that indicates the object class selected from the list with a predetermined number of object class indications that is estimated by the respective classification module (e.g. a neural network 12a, 12b, 12c, 12d as having the highest likelihood. The evaluation module 9 receives the classification signals Ca, Cb, Cc, Cd from each of the classification modules and performs the following procedures in a parallel manner:

It generates a class indication signal I indicative for an object class identified as the most probable one of the object classes on the list with the predetermined number of object class indications and it generates a quality assessment signal Q indicating a value for an extent to which the inspected 3D object meets the quality requirements for the most probable one of the object classes.

Further, in the example shown, based on the class indication signal I and the quality assessment signal Q, it generates a control signal CS for controlling production machinery.

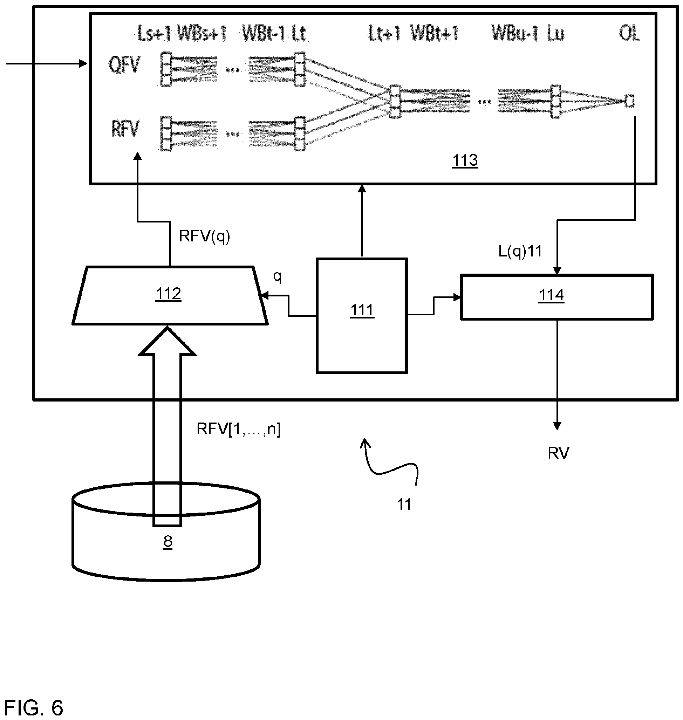

FIG. 6 shows in more detail an exemplary ranking module 11 that is configured to provide on the basis of the plurality QFV of object information signals a ranking vector RV. The ranking vector RV indicates a list with a predetermined number of object class indications estimated by the ranking module as having the highest likelihood of being the object class of the 3D object. In the embodiment shown, the ranking module 11 comprises a module controller 111, an input selection element 112, a first neural network 113 and an output storage element 114. In the embodiment shown the first neural network 113 is partly provided as a Siamese twin having identical input branches wherein a first one of the branches is to receive a query vector, i.e. the plurality QFV of object information signals and the second one is a reference vector, i.e. a plurality RFV(q) of object information signals expected for a reference object q. In operation the module controller 111 causes the input selection element 112 to subsequently retrieve stored reference feature vectors stored in the database for respective reference objects. Only a number r of reference feature vectors of objects of which it is known that they are currently being produced as a (semi-finished) product need to be retrieved. The retrieved stored reference feature vector, denoted as RFV is provided to the second one of the input branches of the first neural network 113 and it causes the first neural network 113 to provide an indication for a likelihood L(q) that the inspected object is a specimen of the class q having the selected reference feature vector RFV. The module controller 111 controls the output storage element 114 to keep the indications of a number of classes that are estimated as having the highest likelihood of being the object class of the 3D object. In this process the output storage element 114 may maintain an ordered list of object classes in an order determined by the likelihood of being the object class of the 3D object. The number of classes kept in the output storage element 114 is for example a predetermined fraction of the total number of potential object classes, i.e. the number of object classes that is selected by the module controller 111 for comparison. Alternatively, the output storage element 114 can be provided as heap structure, so that it keeps the most likely classes but not necessarily in an ordered manner. This reduces computation requirements.

The first neural network 113 that produces the correspondence measure of a Query Feature Vector (QFV) each time with one Reference Feature Vector (RFV) of the set of *r* Reference Feature Vectors (RFVS1...r) is now described in more detail. As noted above, the first neural network 113 can be considered as a 'Siamese Neural Network' because it converges two branches of computational neural network layers and weights into one main branch. The first branch takes as its input Layer L *s*+*1* the query feature vector. The second branch takes as input the selected reference feature vector RFV and is of identical length. In one embodiment the subsequent layers L *s*+*2* through L t are fully connected layers with length (number of neurons per layer) smaller than the length of L *s*+*1* with associated weights and biases WB *s*+*1* through WB *t-1* but in other embodiments, the subsequent layers L *s*+*2* through L t may be implemented as any number of layers of other types and varying lengths with or without associated weights and biases. The layer L *t*+*1* is the distance measure layer which in one embodiment may be implemented as a L1 regularization layer of the same length as L *s*+*2* without associated weights or biases but in other embodiments may be implemented as any number of layers of other types and varying lengths with or without associated weights and biases. In one embodiment the subsequent layers L *t+2* through L *u* are fully connected layers of the same length as L *s*+*2* with associated weights and biases WB *t+2* through WB *u-1* but in other embodiments the subsequent layers L *t+2* through L u may be implemented as any number of layers of other types and varying lengths with or without associated weights and biases. In one embodiment the Output Layer OL may be implemented as a sigmoid layer with a single neuron that is fully connected to the first-to-last layer L *u* without associated weights and biases but in other embodiments OL may be implemented as a layer of any other type and varying length with or without associated weights and biases.

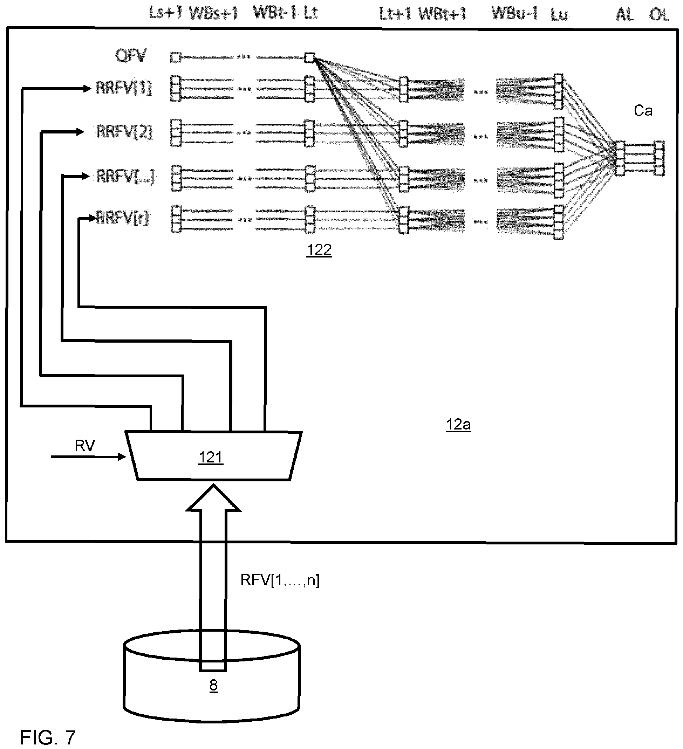

FIG. 7 shows in more detail an embodiment of classification module e.g. 12a, 12b, 12c, 12d, previously seen in FIG. 5 that indicates the object class selected from the list with a predetermined number of object class indications that is estimated by that classification module as having the highest likelihood. Based on the ranking vector RV a reference data preparation module creates a set of r Reduced Reference Feature Vectors (RRFV). The object information signal, indicated as QFV in FIG. 7, is provided to a first branch of a neural network 122 comprised in the classification module 12a.

In one embodiment there are *r* ^{∗} *(r-1)* subsequent branches that can be indexed as b[ *i* ][ *j* ] *{i* ∈ *1*,...,*r} {j* ∈ *1*,...,*r-1}* where the input to each set of branches b[ *i* ] is the set of reference feature vectors where the [ *j* ]'th element of the set is the reference feature vector associated by the [ j ]'th label of the Rank Vector (RV) provided by the ranking module 11 minus the i 'th reference feature vector.

For example, let the set of reference feature vectors = [1,2,3,4,5,6,7,8,9] and let the Rank Vector RV = [9,2,4,1] then the set RRFV of reduced reference feature vectors is:
RRFV = [ [2,4,1],
[9,4,1],
[9,2,1],
[9,2,4] ].

In one embodiment the *r* ^{∗} *(r-1)* input layers L *s*+*1* are directly connected to an L1 regularization layer to which also the input layer L *s*+*1* of the first branch is connected without associated weights or biases but in other embodiments the layers L *s*+*1* through L *t*+*1* may be implemented as any number of layers of other types and varying lengths with or without associated weights and biases.

In one embodiment the *r* ^{∗} *(r-1)* L1 regularization layers are connected to a set of subsequent layers L *t+1* through L *u* of which the L u layer consists of *r* fully connected layers with softmax activation with weights and biases WB *t*+*1* through WB *u-1* but in other embodiments the layers L *t*+*1* through L u may be implemented as any number of layers of other types and varying lengths with or without associated weights and biases.

In one embodiment each element of the r softmax layers of L *u* is then averaged into each element of the AL layer of length r which is then normalized into the Output Layer OL but in other embodiments the r layers in L u may be connected to any number of layers of other types and varying lengths with or without associated weights and biases.

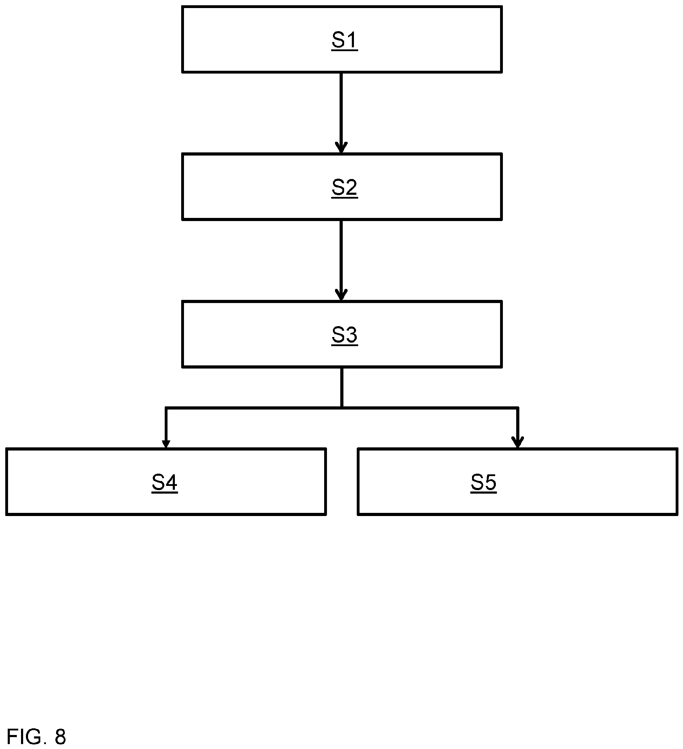

FIG. 8 schematically shows a method of inspecting 3D objects. The method shown therein comprises providing S1 sensing data indicative for sensed physical aspects of a 3D object OBJ and providing S2 a plurality of object information signals, each indicative for a respective characteristic in the sensing data. According to one option sensing data is provided with a plurality of sensing devices that each provide sensing data indicative for a specific sensed physical aspect of a 3D object OBJ as illustrated in FIG. 1. According to an other option a single sensing device is used to provide the sensing data and a plurality of object information signals each indicative for a particular characteristic is extracted from the sensing data by respective feature modules as is shown in FIG. 4. Still further hybrid approaches are possible wherein a first plurality of different sensing data is obtained with proper sensing devices and a second plurality, larger than the first plurality, of object information signals is obtained using feature modules that extract mutually different object information signals each indicative for a particular characteristic based on sensing data obtained from one or more of the sensing devices. In one example respective ones of a plurality of feature modules extract respective object information signals from a common sensing device. For example each of the feature modules of the plurality extracts object information signals representative for a specific spatial frequency range. In another example a feature module extracts an object information signal using a combination of sensing data from mutually different sensing devices.

Subsequently, the respective feature vector Fp of each characteristic CHp is compared S3 with each of the reference feature vectors FRp,q in the respective reference feature vector set FRp for the characteristic. As a result of this comparison a respective correspondence indication CPp,q is provided for the correspondence of the extracted feature vector Fp for the characteristic CHp with each of the reference feature vectors for the characteristic. As specified above, a respective reference feature vector FRp,q in a reference feature vector set FRSp for a characteristic is the feature vector expected to be extracted for the respective characteristic CHp if the 3D-object is a specimen of the respective one OBJq of the plurality of classes. The correspondence indications CPp,q together form a set of correspondence indications indicating respective correspondences between respective characteristics of the inspected 3D-object OBJ and the respective characteristics of a reference object class OBJq.

Subsequent to performing these comparisons in step S3, an identification procedure S4 and a qualification procedure S5 are performed in a parallel manner.

In the identification procedure S4 a class indication signal I is generated based on the correspondence indications CPp,q obtained in step S3. The class indication signal I indicates which one of the object classes is the most probable object class of which the inspected object OBJ is a member. Optionally, the class indication signal I may further indicate respective probabilities Pq for a membership of the inspected 3D object OBJ belonging to respective object classes OBJq, e.g. a list of a predetermined number of object classes and their probabilities, selected as the most probable. Or a list of object classes and their probabilities restricted to probabilities exceeding a predetermined threshold value, or a list of all object classes and their probabilities.

In the qualification procedure S5 a quality assessment signal Q is generated based on the correspondence indications CPp,q obtained in step S3. The quality assessment signal Q indicates a value for an extent to which the inspected 3D object meets the quality requirements for the most probable one of the object classes. Optionally the quality assessment signal Q further indicates respective values for an extent to which the inspected 3D object meets quality requirements for respective object classes.

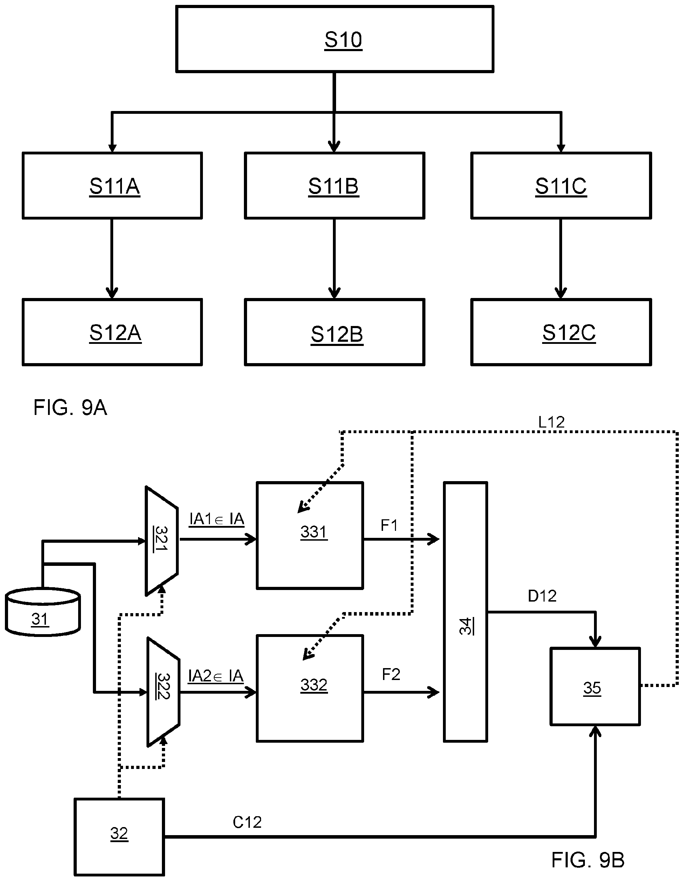

FIG. 9A and 9B schematically show a training procedure for training a 3D-object identification and quality assessment system. As an example, it is presumed that the system operates on the basis of visual data obtained for example with a camera, for example a 2D camera, a 3D camera or another visual data acquirement system. Hence in that case an image is obtained as a 3D-object information input signal. In other examples additionally or alternatively other object information acquisition devices are used, for example acoustic sensors. In a step S10 of the training procedure in this example, at least one example image Ic of each object class c is acquired, wherein c = 1 to C, C being the number of object classes.

In a next step, for example S11A, a respective set IAc of mutually different augmented images {Ic1, Ic2,...,Icn} are generated for each example image Ic. Therewith for each object class an augmented set of images is obtained, comprising the augmented images and optionally also the at least one example image Ic. Therewith a first superset IA is obtained that comprises all augmented sets IAc created in step S11A. According to the present disclosure, mutually different supersets of images IA, IB, IC are obtained in the steps S11A, S11B and S11C.

For example in step S11A the augmented set IAc of images for a sample image Ic of object class 'c' comprises images that are modified by varying color and shape, but not by varying size of the objects. The superset, i.e. the collection of augmented sets IAc obtained in this way for all object classes is denoted as IA. For example in step S11B the augmented set IBc of images for a sample image Ic of object class 'c' comprises images that are modified by varying size and shape, but not by varying color of the objects. The superset, i.e. the collection of augmented sets IBc obtained in this way for all object classes is denoted as IB. For example in step S11C the augmented set ICc of images for a sample image Ic of object class 'c' comprises images that are modified by varying size and color, but not by varying shape of the objects. The superset, i.e. the collection of augmented sets ICc obtained in this way for all object classes is denoted as IC.

In step S12A a first neural network is trained with the collection IA of all augmented sets IAc obtained in step S11A. Analogously, in step S12B a second neural network is trained with the collection IB of all augmented sets IBc obtained in step S11B. Likewise, in step S12C a third neural network is trained with the collection IC of all augmented sets ICc obtained in step S11C.

Training of the first, the second and the third neural network can take place in a semi-supervised manner. As an example the training procedure is described in more detail for the first neural network denoted as NN1 in FIG. 9B.

In FIG. 9B a controller 32 controls selection elements 321, 322 to select a pair of a first image IA1 and a second image IA2 from a database 31 comprising all images in the collection IA. The first image IA1 and the second image IA2 can either be a member of the same augmented set IAc or be members of mutually different augmented sets. These are provided as input to a first neural network 331 and a second neural network 332 forming a Siamese twin. I.e. they have the same architecture, have been initialized in the same manner and are trained together using the same loss data. In response to the images IA1, IA2 received at their input the first neural network 331 and a second neural network 332 each generate a feature vector F1, F2. A distance evaluator 34 computes a value D12 for a distance measure, such as a cosine distance measure. A feedback module 35 compares the value D12 with a value C12 indicated by the controller 32 and in response thereto generates a loss value L12 with which the neural networks are trained together by a backpropagation process. The value C12 indicated by the controller is 0 if the first and the second image IA1, IA2 are a member of the same augmented set IAc, and the value indicated by the controller differs from 0, e.g. 1, if the images IA1, IA2 are from mutually different augmented sets. In this procedure S12A the neural networks 331, 332, are trained to output feature vectors F1, F2, such that the value D12 of the distance measure is close to 0 if the first and the second image IA1, IA2 are a member of a same augmented set IAc and to output feature vectors F1, F2, such that the value D12 of the distance measure is substantially different from 0 if the first and the second image IA1, IA2 are a member of mutually different augmented sets IAc, IAc'. It is noted that in practice only a single neural network may be trained. In that case the single neural network is subsequently provided with the first and the second training image IA1, IA2 and the loss function L12 is based on the value D12 computed for the subsequently outputted feature vectors F1, F2 and the value C12 indicated by the controller 32.

As mentioned above, in step S12A the neural network is trained with training images selected from the collection IA. Therein mutually different images from an augmented set IAc of images of a same class typically vary in color and shape, but not in size. Accordingly, the neural network trained in step S12A is particularly sensitive to variations in size. Similarly, in step S12B the neural network is trained with training images selected from the collection IB. Therein mutually different images from an augmented set IBc of images of a same class typically vary in size and shape, but not in size. Accordingly, the neural network trained in step S12B is particularly sensitive to variations in color. Still further, in step S12C the neural network is trained with training images selected from the collection IC. Therein mutually different images from an augmented set ICc of images of a same class typically vary in color and shape, but not in size. Accordingly, the neural network trained in step S12C is particularly sensitive to variations in size.

It is noted that in the embodiment shown in FIG. 9B two neural networks 331, 332 are provided as a Siamese twin that in parallel compute a feature vector F1, F2. In an alternative embodiment a single neural network is present that sequentially computes the feature vectors F1, F2 for the images IA1 and IA2.

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

## Claims

1. A 3D-object identification and quality assessment system (1), comprising:
a facility to provide for an inspected 3D-object respective sets (CPq) of correspondence indications (CPp,q), each set of correspondence indications indicating respective correspondences between respective characteristics of the inspected 3D-object (OBJ) and said respective characteristics of a reference object class (OBJq);
an evaluation module (9) configured to receive the respective sets (CPq) of correspondence indications and to perform the following procedures in a parallel manner:
generating a class indication signal (I) indicative for a most probable object class identified for the inspected 3D object; and
generating a quality assessment signal (Q) indicating a value for an extent to which the inspected 3D object meets the quality requirements for the most probable one of the object classes.

2. The system (1) according to claim 1, wherein the facility to provide the respective sets (CPq) of correspondence indications (CPp,q), comprises:
- an object information extraction unit comprising one or more sensing devices (2a,...,2f) to provide sensing data indicative for sensed physical aspects of a 3D object (OBJ) and to provide a plurality of object information signals, each indicative for a respective characteristic in said sensing data;
- a database (8) storing respective reference feature vector sets (FRSp) for respective characteristics (CHp) wherein each respective reference feature vector set comprises respective reference feature vectors ({FRp,q}) for respective object classes (OBJq) of 3D-objects, wherein a respective reference feature vector (FRp,q) in a respective reference feature vector set is the feature vector expected to be extracted for the respective characteristic (CHp) if the 3D-object is a specimen of the respective one (OBJq) of the plurality of classes;
- a respective comparator (4p; 4a,... ,4f) for each respective characteristic configured to compare the feature vector for said respective characteristic extracted by its associated feature module with each of the reference feature vectors (FRp,q) in the respective feature set for said respective characteristic and to output the respective correspondence indication (CPp,q) for the correspondence of the extracted feature vector for said respective characteristic with each of the reference feature vectors for said respective characteristic.

3. The system according to claim 1 or 2, wherein the class indication signal (I) further indicates respective probabilities that the inspected 3D object belongs to respective object classes.

4. The system according to claim 1, 2 or 3, wherein the quality assessment signal (Q) further indicates respective values for an extent to which the inspected 3D object meets quality requirements for respective object classes.

5. The system according to one or more of the preceding claims, wherein generating a class indication signal (I) comprises indicating an inspected 3D object as being a member of an object class if at least a subset of said correspondence indications (CPp,q) are indicative for a correspondence of the inspected 3D object with said object class (OBJq).

6. The system according to one or more of the preceding claims, wherein generating a quality assessment signal (Q) comprises indicating that the inspected 3D object meets the quality requirements for an object class (OBJq) if each of said correspondence indications (CPp,q) are indicative for a correspondence of the inspected 3D object with said object class (OBJq).

7. The system according to one or more of the preceding claims, wherein the one or more sensing devices comprise one or more of a Time Of Flight based laser scanner, an Infrared grid projection based laser scanner an RGB camera, an RGBD camera, a sonar sensors, a radar scanners, an X-ray scanner and a CT-scanner, digital holography imaging device, weighting device.

8. The system according to one or more of the preceding claims, wherein the plurality of feature modules comprises at least two feature modules (3a, ...., 3f) that are configured to extract a respective feature vector (Fa,...,Ff) for a respective one of a plurality of characteristics from output data obtained from a common sensing device (2).

9. A 3-dimensional (3D) object manufacturing system, in addition to the 3D-object identification and quality assessment system of one or more of the preceding claims comprising:
- a specification receiving facility to receive product specification data;
- one or more manufacturing system units for manufacturing 3D-objects in accordance with said product specification data;
- at least an actuator system unit to receive an inspected 3D-obj ect and to act on said 3D-object in accordance with the identification signal (I) and the quality assessment signal (Q).

10. A 3D-object identification and quality assessment method, comprising:
- providing for an inspected 3D-object respective sets (CPq) of correspondence indications (CPp,q), each set of correspondence indications indicating respective correspondences between respective characteristics of the inspected 3D-object (OBJ) and said respective characteristics of a reference object class (OBJq);
- in a parallel manner performing an identification procedure (S4) and a qualification procedure (S5); wherein:
- the identification procedure (S4) comprises, based on provided correspondence indications (CPp,q) generating a class indication signal (I) indicative for a most probable one of the object classes of an inspected 3D-object; and
- the qualification procedure (S5) comprises based on the provided correspondence indications (CPp,q) generating a quality assessment signal (Q) indicating respective values for an extent to which the inspected 3D object meets quality requirements for the most probable one of the object classes.

11. A 3D-object identification and quality assessment method according to claim 10, wherein said correspondence indications (CPp,q) are provided with a procedure comprising:
- sensing (S1) one or more physical aspects of the inspected 3D object (OBJ); and providing output data (O; Oa,...,Of) indicative for the one or more sensed physical aspects of the inspected 3D object (OBJ);
- extracting (S2) respective feature vectors (Fp) indicative for respective one of a plurality of characteristics (CHp) in the output data;
- comparing (S3) the respective feature vector (Fp) of each characteristics (CHp) with each of reference feature vectors (FRp,q) in a respective reference feature set (FRp) for said each characteristic and providing a respective correspondence indication (CPp,q) for the correspondence of the extracted feature vector (Fp) for said respective characteristic (CHp) with each of the reference feature vectors for said respective characteristic, wherein a respective reference feature vector (FRp,q) in a respective reference feature vector set (FRSp) is the feature vector expected to be extracted for the respective characteristic (CHp) if the 3D-object is a specimen of the respective one (OBJq) of the plurality of classes.

12. A method of training a 3D-object identification and quality assessment system that comprises a plurality of trainable feature modules to be trained for generating a respective feature vector from an object information input signal, the method comprising:
acquiring (S10) a respective object information input signal (Ic) for each of a plurality of object classes;
for each object information input signal (Ic) generating (S11A, S11B, S11C) mutually different types of augmented sets (IAc, IBc, ICc) of object information input signals, wherein each type of augmented set is obtained by varying N-1 of a number of N signal properties, wherein N is a natural number that is at least equal to the number of augmented sets and wherein a respective one of the N properties is not varied in each of the mutually different augmented sets;
providing a plurality of supersets, wherein each superset comprises all augmented sets of a respective type;
using each of the supersets to train (S12A, S12B, S12C) a respective feature module, wherein training a respective feature module with a respective superset comprises repeating the following steps:
selecting a pair of a first object information input signal (IA1) and a second object information input signal (IA2) from the respective superset,
with the trainable feature module computing a respective feature vector (F1, F2) for the first and the second object information input signal,
computing a distance value (D12) indicative for a distance between the feature vectors (F1, F2),
generating a loss value (L12) by comparing the distance value (D12) with a predetermined distance value (C12) depending on whether or not the first and the second object information input signals are augmented object information input signals derived from an object of a same object class,
training the trainable feature module by backpropagation of the loss value.
